# EUROPÄISCHE PATENTSCHRIFT

(11) **EP 4 122 307 B1**
(45) Veröffentlichungstag und Bekanntmachung des Hinweises auf die Patenterteilung: **23.04.2025**
(21) Anmeldenummer: 22401017.3
(22) Anmeldetag: 12.07.2022
(51) Int. Cl.: A01C 7/08

(54) **VERTEILVORRICHTUNG FÜR KÖRNIGES MATERIAL**
DISTRIBUTION DEVICE FOR GRANULAR MATERIAL
DISPOSITIF DE DISTRIBUTION POUR MATÉRIAUX GRANULÉS

(30) Priorität: 19.07.2021 DE 102021118521
(43) Veröffentlichungstag der Anmeldung: 25.01.2023
(73) Patentinhaber: Amazonen-Werke H. Dreyer SE & Co. KG, 49205 Hasbergen (DE)
(72) Erfinder: Flucke, Jan, 27798 Hude (DE); Wien, Thomas, 28816 Stuhr (DE)

(56) Entgegenhaltungen:
- EP-B1- 0 799 560
- US-A1- 2020 045 877
- US-B2- 10 779 460

## Beschreibung

Die Erfindung betrifft eine Verteilvorrichtung für körniges Material nach dem Oberbegriff des Patentanspruchs 1, eine landwirtschaftliche Verteilmaschine nach dem Oberbegriff des Patentanspruchs 13 und ein Montageverfahren für eine Verteilvorrichtung nach dem Oberbegriff des Patentanspruchs 14.

Die EP 0 799 560 B1 und US 10 779 460 B2 offenbaren derartige Verteilvorrichtungen. Aus der US 2020/045877 A1 ist ferner eine Verteilvorrichtung bekannt bei der sich an eine Verteilkammer als Abgänge dienende, ellbogenförmige Rohrformstücke anschließen.

Aufgrund unterschiedlicher Arbeitsbreiten sowie saatgutabhängiger Reihenabstände wird bei der Ausbringung von körnigem Material, beispielsweise Saatgut oder Dünger, eine spezifische Anzahl von Ablageeinrichtungen für das körnige Material eingesetzt. Beispielsweise sind landwirtschaftliche Verteilmaschinen bekannt, welche mit 24 Ablageeinrichtungen ausgestattet sind, um das körnige Material entlang von 24 voneinander beabstandeten Reihen auf der landwirtschaftlichen Nutzfläche abzulegen. Üblich sind außerdem landwirtschaftliche Maschinen, welche mit 32 Ablageeinrichtungen ausgestattet sind, sodass das körnige Material entlang von 32 voneinander beabstandeten Reihen auf der landwirtschaftlichen Nutzfläche abgelegt wird.

Aufgrund der voneinander abweichenden Anzahl von Ablageeinrichtungen werden unterschiedliche Verteilvorrichtungen eingesetzt, deren Verteilkammern eine voneinander abweichende Anzahl an Abgängen aufweisen, über welche Luft-Material-Einzelströmungen aus der Verteilkammer in Richtung der Ablageeinrichtungen ausleitbar sind. In der Verteilkammer wird dann eine durch eine Hauptförderleitung eingeleitete Luft-Material-Hauptströmung in die erforderliche Anzahl von Luft-Material-Einzelströmungen aufgeteilt, um diese über Ausbringleitungen zu den Ablageeinrichtungen führen zu können.

Moderne Verteilvorrichtungen sind ferner mit Rückführleitungen ausgestattet, über welche Material von Luft-Material-Einzelströmungen zurück in die Hauptförderleitung leitbar ist, wenn die Materialausbringung entlang von einzelnen Reihen temporär unterbrochen werden soll. Je nach Anzahl der Abgänge und Rückführleitungen der Verteilvorrichtung können die endseitigen Befestigungspunkte der Rückführleitung unterschiedliche Abstände voneinander aufweisen. Umso höher die Anzahl der Abgänge aus der Verteilkammer der Verteilvorrichtung ist, desto weiter rückt der obere Befestigungspunkt der Rückführleitung nach außen. Die Rückführleitungen werden bisher durch flexible oder verformbare Schläuche gebildet, über welche ein Radial- und Axialversatz der Befestigungspunkte der Rückführleitungen ohne großen Aufwand ausgeglichen werden konnte.

Bei einigen Verteilvorrichtungen können in den Rückführleitungen jedoch keine flexiblen Schläuche eingesetzt werden, beispielsweise weil die Rückführleitungen jeweils mehrere interne Leitungskanäle aufweisen sollen.

Die der Erfindung zugrundeliegende Aufgabe besteht also darin, bei verschiedenen Modellen einer Verteilvorrichtung, bei welchen die Verwendung von Schläuchen in der Rückführleitung nicht möglich ist oder vermieden werden soll, unabhängig von der Anzahl der Abgänge der Verteilkammer der Verteilvorrichtung bzw. der eingesetzten Ablageeinrichtungen baugleiche Teile in der Rückführleitung einsetzen zu können.

Die Aufgabe wird gelöst durch eine Verteilvorrichtung der eingangs genannten Art, wobei die Rückführleitung ein an beiden Enden gelenkig gelagertes Leitungsglied umfasst.

Über die gelenkige Lagerung können verschiedene Ausrichtungen bzw. Anstellwinkel an dem Leitungsglied realisiert werden. Die Rückführleitung und die dazugehörigen Leitungsaufnahmen können somit bei verschiedenen Modellen der Verteilvorrichtung eingesetzt werden, bei welchen die Leitungsaufnahmen voneinander abweichende Abstände bzw. Versätze zueinander aufweisen. Modellübergreifend kann somit unabhängig von der Anzahl der Abgänge der Verteilkammer der Verteilvorrichtung bzw. der eingesetzten Ablageeinrichtungen die Rückführleitung mit dem gleichen Leitungsglied umgesetzt werden. Leitungsglieder, welche an die Anzahl der Abgänge der Verteilkammer bzw. der Befestigungspunkte in der Rückführleitung angepasst sind, sind nicht erforderlich. Modellübergreifend kommt es somit zu einer erheblichen Reduzierung der Teilevielfalt. Außerdem können durch die gelenkige Lagerung des Leitungsglieds trotz des Verzichts auf flexible Schläuche Montagetoleranzen ausgeglichen werden. Das gelenkig gelagerte Leitungsglied ist trotz gelenkiger Lagerung im Betrieb nicht bewegbar, da es durch zwei Leitungsaufnahmen an den Leitungsenden fixiert ist. Die gelenkige Lagerung des Leitungsglieds wird sich also insbesondere in der Montage der Verteilvorrichtung zunutze gemacht. Das Leitungsglied ist also beiseitig gelenkig gelagert. Bei einer beidseitig vorhandenen gelenkigen Lagerung des Leitungsglieds kann die Beweglichkeit des Leitungsglieds aufgehoben werden. Das gelenkig gelagerte Leitungsglied kann einteilig oder mehrteilig sein.

Das körnige Material kann beispielsweise Saatgut oder Dünger sein. Demnach kann die landwirtschaftliche Verteilmaschine eine Sämaschine oder eine Düngerausbringmaschine sein. Die Verteilvorrichtung kann Bestandteil eines Verteilerkopfes der landwirtschaftlichen Verteilmaschine sein.

Das gelenkig gelagerte Leitungsglied ist an beiden Enden derart gelenkig gelagert, dass das gelenkig gelagerte Leitungsglied nicht nur verschwenkt, sondern auch translatorisch bewegt werden kann. Auf diese Weise können Fertigungstoleranzen ausgeglichen werden, sodass ein Längenausgleich umgesetzt wird.

In einer bevorzugten Ausführungsform der erfindungsgemäßen Verteilvorrichtung ist das gelenkig gelagerte Leitungsglied als starre Rohrleitung ausgebildet. Die Rohrleitung ist also steif bzw. unflexibel. Das Leitungsglied kann beispielsweise ein Kunststoffteil, insbesondere ein Kunststoffspritzgussteil, sein. Das Leitungsglied kann also ein Kunststoffrohr sein. Vorzugsweise weist das Leitungsglied einen im Wesentlichen kreisrunden Querschnitt auf. Alternativ kann das Leitungsglied auch andere Querschnittsformen aufweisen.

Darüber hinaus ist eine erfindungsgemäße Verteilvorrichtung vorteilhaft, bei welcher die Rückführleitung eine erste Leitungsaufnahme aufweist, wobei ein erster Gelenkabschnitt des gelenkig gelagerten Leitungsglieds an der ersten Leitungsaufnahme angeordnet ist. Der erste Gelenkabschnitt des gelenkig gelagerten Leitungsglieds kann zerstörungsfrei lösbar mit der ersten Leitungsaufnahme verbunden sein. Vorzugsweise kann die Ausrichtung bzw. der Anstellwinkel des Leitungsglieds nach dem Verbinden des ersten Gelenkabschnitts des Leitungsglieds und der ersten Leitungsaufnahme durch Verschwenken des Leitungsglieds verändert werden, sofern das Leitungsglied an dem gegenüberliegenden Ende noch nicht fixiert ist.

Es ist darüber hinaus eine Verteilvorrichtung bevorzugt, bei welcher die erste Leitungsaufnahme und der erste Gelenkabschnitt des gelenkig gelagerten Leitungsglieds eine Gelenk-Lagerung, insbesondere eine Kugelgelenk-Lagerung, bilden. Die erste Leitungsaufnahme kann als Gelenkkopf und der erste Gelenkabschnitt kann als Gelenkpfanne ausgebildet sein. Alternativ kann die erste Leitungsaufnahme als Gelenkpfanne und der erste Gelenkabschnitt als Gelenkkopf ausgebildet sein. Die Gelenkpfanne bildet das Gegenstück zum Gelenkkopf und umschließt diesen zumindest teilweise. Alternativ zu der Gelenkpfanne kann der Gelenkkopf auch in einen im Wesentlichen zylindrischen Lagerabschnitt eingreifen, sodass die Gelenk-Lagerung eine translatorische Bewegung des Leitungsglieds zulässt. Wenn der Gelenkkopf von einer Gelenkpfanne umschlossen wird, sind vorzugsweise nur rotatorische Bewegungen des gelenkig gelagerten Leitungsglieds möglich. Die Gelenk-Lagerung kann eine mehrachsige, insbesondere eine dreiachsige Verdrehbarkeit des gelenkig gelagerten Leitungsglieds in Bezug auf die erste Leitungsaufnahme erlauben, wenn das gelenkig gelagerte Leitungsglied nicht fixiert ist. Die Gelenk-Lagerung kann translatorische Bewegungen des gelenkig gelagerten Leitungsglieds in Bezug auf die erste Leitungsaufnahme verhindern.

Die erste Leitungsaufnahme und das gelenkig gelagerte Leitungsglied können auch über einen Federbalg miteinander verbunden sein. Das Leitungsglied ist in diesem Fall über den Federbalg gelenkig gelagert.

In einer anderen bevorzugten Ausführungsform der erfindungsgemäßen Verteilvorrichtung weist die zweite Rückführleitung eine zweite Leitungsaufnahme auf, wobei ein zweiter Gelenk-Abschnitt des gelenkig gelagerten Leitungsglieds an der zweiten Leitungsaufnahme angeordnet ist. Der zweite Gelenk-Abschnitt des gelenkig gelagerten Leitungsglieds kann zerstörungsfrei lösbar mit der zweiten Leitungsaufnahme verbunden sein. Vorzugsweise kann die Ausrichtung bzw. der Anstellwinkel des Leitungsglieds nach dem Verbinden des zweiten Gelenkabschnitts des Leitungsglieds und der zweiten Leitungsaufnahme durch Verschwenken des Leitungsglieds verändert werden, sofern das Leitungsglied an dem gegenüberliegenden Ende noch nicht fixiert ist.

Es ist außerdem eine erfindungsgemäße Verteilvorrichtung bevorzugt, bei welcher die zweite Leitungsaufnahme und der zweite Gelenk-Abschnitt des gelenkig gelagerten Leitungsglieds eine Gelenk-Lagerung, insbesondere eine Kugelgelenk-Lagerung, bilden. Die zweite Leitungsaufnahme kann als Gelenkkopf und der zweite Gelenkabschnitt kann als Gelenkpfanne ausgebildet sein. Alternativ kann die zweite Leitungsaufnahme als Gelenkpfanne und der zweite Gelenkabschnitt als Gelenkkopf ausgebildet sein. Die Gelenkpfanne bildet das Gegenstück zum Gelenkkopf und umschließt diesen zumindest teilweise. Alternativ zu der Gelenkpfanne kann der Gelenkkopf auch in einen im Wesentlichen zylindrischen Lagerabschnitt eingreifen, sodass die Gelenk-Lagerung eine translatorische Bewegung des Leitungsglieds zulässt. Wenn der Gelenkkopf von einer Gelenkpfanne umschlossen wird, sind vorzugsweise nur rotatorische Bewegungen des gelenkig gelagerten Leitungsglieds möglich. Die Gelenk-Lagerung kann eine mehrachsige, insbesondere eine dreiachsige Verdrehbarkeit des gelenkig gelagerten Leitungsglieds in Bezug auf die zweite Leitungsaufnahme erlauben, wenn das gelenkig gelagerte Leitungsglied nicht fixiert ist. Die Gelenk-Lagerung kann translatorische Bewegungen des gelenkig gelagerten Leitungsglieds in Bezug auf die zweite Leitungsaufnahme verhindern.

In einer anderen Ausführungsform der erfindungsgemäßen Verteilvorrichtung ist die durch die erste Leitungsaufnahme und den ersten Gelenkabschnitt des gelenkig gelagerten Leitungsglieds gebildete Gelenk-Lagerung und/oder die durch die zweite Leitungsaufnahme und den zweiten Gelenk-Abschnitt des gelenkig gelagerten Leitungsglieds gebildete Gelenk-Lagerung mit einer Führungseinrichtung ausgestattet, welche dazu eingerichtet ist, das gelenkig gelagerte Leitungsglied bei einer Schwenkbewegung entlang eines vorgegebenen Bewegungspfads zu führen und/oder die Schwenkbewegung des gelenkig gelagerten Leitungsglieds zu begrenzen. Die Führungseinrichtung kann einen Führungsstift umfassen, welcher in einem Führungsschlitz der Führungseinrichtung geführt wird. Beim Verschwenken des Leitungsglieds bewegt sich der Führungsstift vorzugsweise innerhalb des Führungsschlitzes und wird von dem Führungsschlitz während der Schwenkbewegung des Leitungsglieds geführt. Der Führungsstift kann an der Leitungsaufnahme oder dem Gelenk-Abschnitt des Leitungsglieds angeordnet sein. Ferner kann der Führungsschlitz an dem Gelenk-Abschnitt des gelenkig gelagerten Leitungsglieds oder an der Leitungsaufnahme angeordnet sein. Die Führungseinrichtung kann auch als Anschlag fungieren. Beispielsweise schlägt der Führungsstift an der Kontur des Führungsschlitzes an, wenn das Leitungsglied in eine Endausrichtung verschwenkt wurde.

Darüber hinaus ist eine erfindungsgemäße Verteilvorrichtung mit einem Rückführkörper bevorzugt. Der Rückführkörper verbindet mehrere Rückführleitungen mit der Hauptförderleitung. An dem Rückführkörper können mehrere zweite Leitungsaufnahmen für mehrere gelenkig gelagerte Leitungsglieder ausgebildet sein. Vorzugsweise münden mehrere gelenkig gelagerte Leitungsglieder in den Rückführkörper. Der Rückführkörper kann ein Rückführtrichter sein.

In einer weiteren bevorzugten Ausführungsform der erfindungsgemäßen Verteilvorrichtung verlaufen innerhalb des gelenkig gelagerten Leitungsglieds zwei voneinander getrennte Leitungskanäle. Die zwei Leitungskanäle sind vorzugsweise durch eine innerhalb des gelenkig gelagerten Leitungsglieds verlaufende Trennwand voneinander getrennt. Ein Leitungskanal innerhalb des gelenkig gelagerten Leitungsglieds kann ein Rückführkanal sein, über welchen Material von zumindest einer Luft-Material-Strömung zurück in die Hauptförderleitung leitbar ist. Ein Leitungskanal innerhalb des gelenkig gelagerten Leitungsglieds kann ein Luftabführkanal sein, über welchen Luft von zumindest einer in Richtung der Hauptförderleitung geleiteten Luft-Material-Einzelströmung vor Erreichen der Hauptförderleitung in eine Ausbringleitung einleitbar ist, wobei die Ausbringleitung mit einer Ablageeinrichtung, beispielsweise einem Säschar, verbunden ist. Es können Mindestquerschnitte der Leitungskanäle erforderlich sein, wenn zwei oder mehr als zwei Abgänge vor dem Einleiten der Luft-Material-Strömung in die Rückführleitung zusammengeführt werden.

In einer Weiterbildung der erfindungsgemäßen Verteilvorrichtung ist die Rückführleitung mit zumindest zwei Abgängen der Verteilkammer verbunden. Vorzugsweise weist die Rückführleitung einen Bündelungsabschnitt auf, welcher dazu eingerichtet ist, zumindest zwei Luft-Material-Einzelströmungen vor dem Einleiten in das gelenkig gelagerte Leitungsglied zusammenzuführen. Innerhalb des Bündelungsabschnitts werden zumindest zwei Luft-Material-Einzelströmungen zu einer die zumindest zwei Luft-Material-Einzelströmungen umfassenden Sammelströmung zusammengeführt. Der Bündelungsabschnitt kann Bestandteil eines Bündelungsteils sein, an welchem auch die erste Leitungsaufnahme ausgebildet ist.

In einer anderen bevorzugten Ausführungsform weist die erfindungsgemäße Verteilvorrichtung einen Abscheidesammelbereich auf, in welchen mehrere Rückführleitungen münden und in welchem Luft aus mehreren in den Abscheidesammelbereich eingeleiteten Luft-Material-Strömungen zur Einleitung in mehrere jeweils mit einer Ausbringleitung verbundene Luftabführleitungen der Verteilvorrichtung abscheidbar ist. Die im Abscheidesammelbereich abgeschiedene Luft wird nicht in die Hauptförderleitung zurückgeführt. Eine Beeinträchtigung der Strömung innerhalb der Hauptförderleitung aufgrund einer zu großen Menge an zurückgeführter Luft wird somit effektiv vermieden. Es verbleibt lediglich ein geringfügiger nicht-abgeschiedener Luftanteil, über welchen das Material wieder zurück in die Hauptförderleitung transportiert wird. Die abgeschiedene und in die Ausbringleitung eingeleitete Luft dient auch zum Transportieren des sich noch in der Ausbringleitung befindenden Materials zu einer Ablageeinrichtung, beispielsweise einem Säschar. Die Luft-Material-Einzelströmungen werden über Rückführleitungen in den Abscheidesammelbereich eingeleitet. Vor der Einleitung in den Abscheidesammelbereich können auch mehrere Luft-Material-Einzelströmungen gebündelt werden, beispielsweise über einen Bündelungsabschnitt. Innerhalb des Bündelungsabschnitts können zwei oder mehr als zwei Luft-Material-Einzelströmungen vor dem Einleiten in den Abscheidesammelbereich zusammengeführt werden. In diesem Fall werden die Luft-Material-Einzelströmungen also als Sammelströmung in den Abscheidesammelbereich eingeleitet. In dem Abscheidesammelbereich kann also auch Luft aus einer mehrere Luft-Material-Einzelströmungen umfassenden Sammelströmung abgeschieden werden.

Die in die Luftabführleitungen eingeleitete Luft wird über die Ausbringleitungen zu den Ablageeinrichtungen der landwirtschaftlichen Verteilmaschine geleitet und unterstützt somit das Fördern des körnigen Materials in den jeweiligen Ausbringleitungen. Die Ablageeinrichtungen können beispielsweise Säschare sein. Die Luftabführleitungen dienen vorzugsweise als Bypass. Die Hauptförderleitung kann als Steigrohr ausgebildet sein.

In einer weiteren bevorzugten Ausführungsform der erfindungsgemäßen Vorrichtung ist der Abscheidesammelbereich teilweise oder vollständig umlaufend ausgebildet. Der Abscheidesammelbereich kann beispielsweise ringförmig ausgebildet sein. Der Abscheidesammelbereich kann also als Ringkammer ausgebildet sein. Im Abscheidesammelbereich kann eine, insbesondere umlaufende, Abscheidefläche und/oder eine, insbesondere umlaufende, Abscheidekante angeordnet sein, wobei die Abscheidefläche und/oder Abscheidekante zu einer Abtrennung eines Luftstroms ohne Materialbeladung oder mit einer verringerten Materialbeladung führt. Der abgetrennte Luftstrom kann dann über eine oder mehrere Luftabführleitungen einer oder mehreren Ausbringleitung zugeführt werden.

Es ist darüber hinaus eine erfindungsgemäße Verteilvorrichtung bevorzugt, bei welcher der Abscheidesammelbereich eine, insbesondere nur eine, mit mehreren oder sämtlichen Luftabführleitungen verbundene Luftabführöffnung aufweist. Es können auch mehrere Luftabführöffnungen vorhanden sein. Die eine oder die mehreren Luftabführöffnungen bilden vorzugsweise den Übergangsbereich zwischen dem Abscheidesammelbereich und den Luftabführleitungen.

Die erfindungsgemäße Verteilvorrichtung wird ferner dadurch vorteilhaft weitergebildet, dass die Luftabführöffnung umlaufend ausgebildet ist. Die Luftabführöffnung ist vorzugsweise als ringförmiger Luftabführschlitz ausgebildet. Die Luftabführöffnung kann beispielsweise einen Öffnungsverlauf mit mehreren Windungen oder Schleifen aufweisen. Die Luftabführöffnung kann einen mäanderförmigen oder zick-zack-förmigen Öffnungsverlauf aufweisen.

Darüber hinaus ist eine erfindungsgemäße Verteilvorrichtung bevorzugt, bei welcher zwischen dem Abscheidesammelbereich und den Luftabführleitungen ein oder mehrere Materialeinleitschutzelemente angeordnet sind, welche luftdurchlässig und dazu eingerichtet sind, das Einleiten von Material in die Luftabführöffnungen zu verhindern. Das Materialeinleitschutzelement kann ein, insbesondere umlaufendes, Gitter, Sieb oder Netz sein. Das Materialeinleitschutzelement kann vorzugsweise von Luft passiert werden, ist jedoch für das körnige Material nicht passierbar. Das Materialeinleitschutzelement kann ein Materialfilter sein, welcher von der Luft passiert werden kann und für das körnige Material nicht passierbar ist. Das Materialeinleitschutzelement weist also Luftdurchtrittsöffnungen auf, deren Größe das Passieren des Materials verhindern. Die Luftdurchtrittsöffnungen können auch durch eine Materialperforierung gebildet werden.

Es ist ferner eine erfindungsgemäße Verteilvorrichtung bevorzugt, bei welcher zwischen dem Abscheidesammelbereich und den Luftabführöffnungen mehrere Materialeinleitschutzelemente angeordnet sind, welche gemeinsam eine Gitter- und/oder Labyrinthstruktur bilden, welche luftdurchlässig und dazu eingerichtet ist, das Einleiten von Material in die Luftabführöffnung zu verhindern. Die Gitterstäbe der Gitterstruktur können eine oder mehrere Stabreihen bilden. Die Labyrinthgänge der Labyrinthstruktur können sich in voneinander beabstandeten Ebenen befinden.

Die der Erfindung zugrundeliegende Aufgabe wird ferner durch eine landwirtschaftliche Verteilmaschine der eingangs genannten Art gelöst, wobei die Verteilvorrichtung der erfindungsgemäßen Verteilmaschine nach einer der vorstehend beschriebenen Ausführungsformen ausgebildet ist. Hinsichtlich der Vorteile und Modifikationen der erfindungsgemäßen landwirtschaftlichen Verteilmaschine wird somit zunächst auf die Vorteile und Modifikationen der erfindungsgemäßen Verteilvorrichtung verwiesen.

Die landwirtschaftliche Verteilmaschine ist vorzugsweise eine Sämaschine oder eine Düngerausbringmaschine. Die landwirtschaftliche Verteilmaschine kann ein Anbaugerät sein, welches über einen Dreipunktkraftheber an einem Traktor befestigt werden kann. Die landwirtschaftliche Verteilmaschine kann eine getragene Verteilmaschine sein, sodass der Traktor als Trägerfahrzeug fungiert. Ferner kann die Verteilmaschine eine gezogene Verteilmaschine sein, sodass der Traktor als Zugmaschine fungiert.

Die der Erfindung zugrundeliegende Aufgabe wird ferner durch ein Montageverfahren der eingangs genannten Art gelöst, wobei ein an beiden Enden gelenkig gelagertes Leitungsglied der Rückführleitung im Rahmen des erfindungsgemäßen Verfahrens ausgerichtet wird. Durch das Ausrichten des gelenkig gelagerten Leitungsglieds wird der Anstellwinkel des Leitungsglieds verändert und auf das Modell der Verteilvorrichtung angepasst. Aufgrund der gelenkigen Lagerung sind keine mehreren unterschiedlichen Leitungsglieder mit unterschiedlichen Krümmungsverläufen für Verteilvorrichtungen mit einer unterschiedlichen Anzahl an Abgängen erforderlich.

Das Montageverfahren wird vorzugsweise eingesetzt, um eine Verteilvorrichtung nach einer der vorstehend beschriebenen Ausführungsformen zu montieren. In einer bevorzugten Ausführungsform des erfindungsgemäßen Montageverfahrens wird das gelenkig gelagerte Leitungsglied über eine Gelenk-Lagerung, insbesondere Kugelgelenk-Lagerung, ausgerichtet.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der Verteilvorvorrichtung in einer schematischen Schnittdarstellung, wobei sich die Umlenkelemente in einer Ausbringstellung befinden;
- Fig. 2: die in der Fig. 1 abgebildete Verteilvorrichtung in einer schematischen Schnittdarstellung, wobei sich die Umlenkelemente in einer Rückführstellung befinden;
- Fig. 3: einen Abscheidesammelbereich einer erfindungsgemäßen Verteilvorrichtung samt Materialeinleitschutzelement in einer schematischen Schnittdarstellung;
- Fig. 4: einen Abscheidesammelbereich einer weiteren erfindungsgemäßen Verteilvorrichtung samt Materialeinleitschutzelement in einer schematischen Schnittdarstellung;
- Fig. 5: einen Abscheidesammelbereich einer weiteren erfindungsgemäßen Verteilvorrichtung samt Materialeinleitschutzelement in einer schematischen Schnittdarstellung;
- Fig. 6: den Strömungskreuzungsbereich einer Verteilvorrichtung in einer schematischen Schnittdarstellung;
- Fig. 7: den Strömungskreuzungsbereich einer weiteren Verteilvorrichtung in einer schematischen Schnittdarstellung;
- Fig. 8: ein Ausführungsbeispiel der erfindungsgemäßen Verteilvorvorrichtung, dessen Verteilkammer eine erste Anzahl von Abgängen aufweist, in einer schematischen Schnittdarstellung;
- Fig. 9: ein Ausführungsbeispiel der erfindungsgemäßen Verteilvorvorrichtung, dessen Verteilkammer eine zweite Anzahl von Abgängen aufweist, in einer schematischen Schnittdarstellung;
- Fig. 10: einen Bündelungsabschnitt einer erfindungsgemäßen Verteilvorvorrichtung von außen;
- Fig. 11: den in der Fig. 10 abgebildeten Bündelungsabschnitt in einer schematischen Schnittdarstellung; und
- Fig. 12: ein gelenkig gelagertes Leitungsglied einer Rückführleitung einer erfindungsgemäßen Verteilvorrichtung in einer Schnittdarstellung.

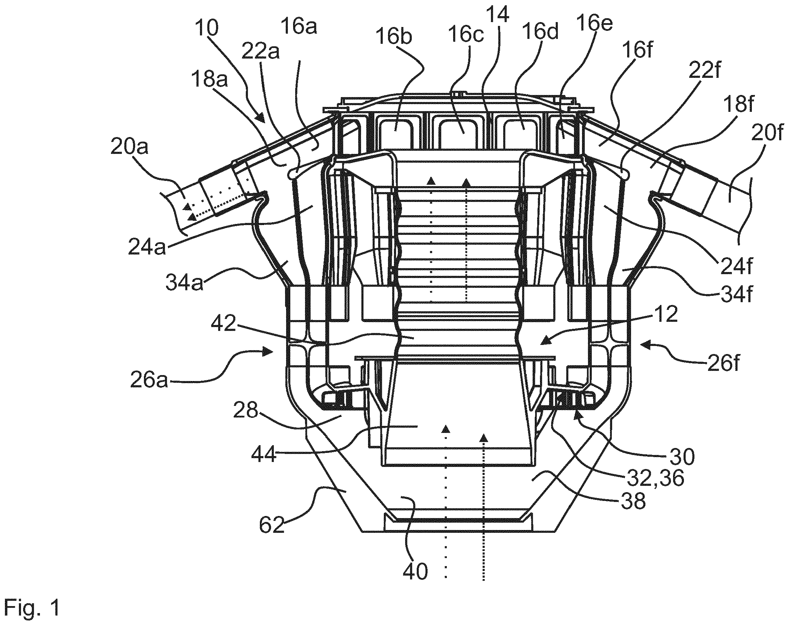

Die Fig. 1 zeigt eine Verteilvorrichtung 10, welche als Verteilerkopf einer als Sämaschine ausgebildeten landwirtschaftlichen Verteilmaschine eingesetzt wird. Die Verteilvorrichtung 10 umfasst ein Hauptförderleitung 12, welche im Wesentlichen senkrecht ausgerichtet ist. Die Hauptförderleitung 12 wird abschnittsweise durch ein Wellrohr gebildet. Durch die Hauptförderleitung 12 steigt eine Luft-Material-Hauptströmung nach oben und wird in eine Verteilkammer 14 der Verteilvorrichtung 10 eingeleitet. Die Verteilkammer 14 weist mehrere entlang des Umfangs angeordnete Abgänge 16a-16f auf, wobei die in die Verteilkammer 14 eingeleitete Luft-Material-Hauptströmung in mehrere durch die Abgänge 16a-16f aus der Verteilkammer 14 herausleitbare Luft-Material-Einzelströmungen aufgeteilt wird. Die Abgänge 16a-16f sind jeweils mit einem Ausbringdurchgang 18a, 18f verbunden, sodass die aus der Verteilkammer 14 ausgeleiteten Luft-Material-Einzelströmungen über die Ausbringdurchgänge 18a, 18f Ausbringleitungen 20a, 20f zugeführt werden können. Die Ausbringleitungen 20a, 20f führen jeweils zu einer Ablageeinrichtung zum Ablegen des Saatguts auf eine landwirtschaftliche Nutzfläche. Die Ablageeinrichtungen können beispielsweise Säschare sein.

Hinter den Abgängen 16a-16f befinden sich schaltbare Umlenkelemente 22a, 22f. Die schaltbaren Umlenkelemente 22a, 22f sind als schwenkbare Klappen ausgebildet. Alternativ können die Umlenkelemente 22a, 22f in einer nicht gezeigten Ausführungsform als Wippe mit zwei Schenkeln oder als zwei zwangsgekoppelte Kugelabschnittelemente ausgeführt sein. Mittels der schaltbaren Umlenkelemente 22a, 22f kann die Verbindung zwischen dem jeweiligen Abgang 16a-16f und der Ausbringleitung 20a, 20f über den Ausbringdurchgang 18a, 18f gesperrt und freigegeben werden. Bei dem in der Fig. 1 dargestellten Zustand ist diese Verbindung freigegeben. Über die Umlenkelemente 22a, 22f kann ferner die Verbindung zwischen den jeweiligen Abgängen 16a, 16f und einem Abscheidesammelbereich 28 über eine Rückführleitung 24a, 24f gesperrt oder freigegeben werden. Bei dem in der Fig. 1 dargestellten Zustand ist diese Verbindung gesperrt.

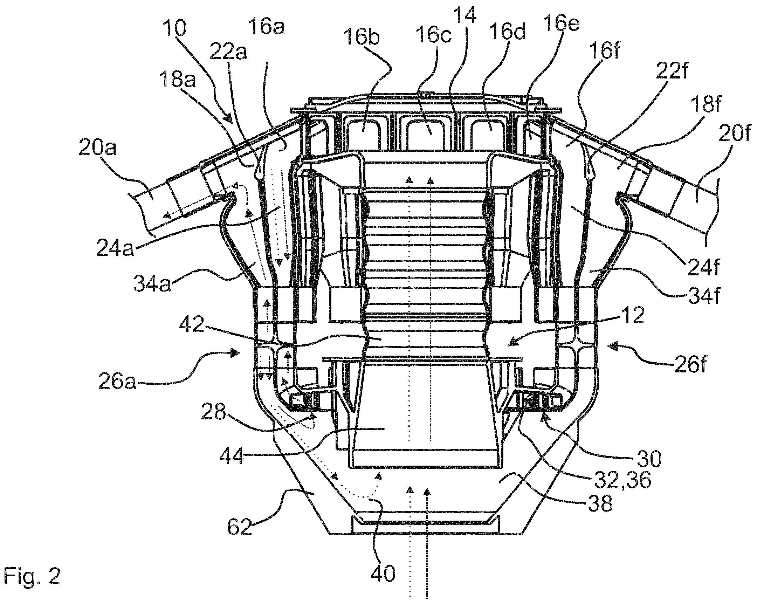

Die Fig. 2 zeigt die Verteilvorrichtung nachdem die Umlenkelemente 22a, 22f von der Ausbringstellung in eine Rückführstellung geschaltet wurden. In der Rückführstellung sperren die Umlenkelemente 22a, 22f die Verbindung zwischen dem jeweiligen Abgang 16a, 16f und der Ausbringleitung 20a, 20f über den Ausbringdurchgang 18a, 18f. Ferner ist die Verbindung zwischen dem jeweiligen Abgang 16a, 16f und dem Abscheidesammelbereich 28 über die Rückführleitung 24a, 24f freigegeben.

Wenn sich die Umlenkelemente 22a, 22f in der Rückführstellung befinden, werden die Luft-Material-Einzelströmungen über Rückführleitungen 24a, 24f und Strömungskreuzungsbereiche 26a, 26f einem Abscheidesammelbereich 28 zugeführt. In den Abscheidesammelbereich 28 münden mehrere Rückführleitungen 24a, 24f. In dem Abscheidesammelbereich wird Luft aus mehreren in den Abscheidesammelbereich 28 eingeleiteten Luft-Material-Einzelströmungen abgeschieden. Die abgeschiedene Luft wird dann in mehrere Luftabführleitungen 34a, 34f der Verteilvorrichtung 10 eingeleitet, wobei die Luftabführleitungen 34a-34f wieder mit den Ausbringleitungen 20a, 20f verbunden sind, sodass die abgeschiedene Luft den Ablageeinrichtungen zugeführt wird. In einer nicht gezeigten Ausführungsform ist ferner denkbar, dass die Umlenkelemente 22a, 22f in der Ausbringstellung die Verbindung zwischen der Ausbringleitung 20a, 20f und der Luftabführleitung 34a, 34f sperren und diese Verbindung nur in der Rückführstellung freigeben.

Der Abscheidesammelbereich 28 ist eine umlaufende Ringkammer. Im Abscheidesammelbereich 28 ist eine umlaufende Abscheidekante 30 angeordnet, welche die Abtrennung eines Luftstroms ohne Materialbeladung verursacht. Der abgeschiedene Luftstrom wird über eine umlaufende Luftabführöffnung 32 aus dem Abscheidesammelbereich 28 abgeführt und in die Luftabführleitungen 34a, 34f eingeleitet. Die Luftabführöffnung 32 ist ein ringförmiger Luftabführschlitz, welcher mit einem Materialeinleitschutzelement 36 ausgestattet ist. Das Materialeinleitschutzelement 36 ist luftdurchlässig und verhindert das Einleiten von Material in die Luftabführleitungen 34a, 34f. Das Materialeinleitschutzelement 36 ist ein Gitter, wobei die Gitterstäbe entlang eines Gitterrings angeordnet sind. Die Gitterstäbe sind derart voneinander beabstandet, dass das Saatgut die Gitterstäbe nicht passieren kann. Falls der durch die Abscheidekante 30 abgeschiedene Luftstrom also noch einzelne Saatkörner umfasst, werden diese durch das Materialeinleitschutzelement 36 am Einströmen in die Luftabführleitungen 34a, 34f gehindert.

Der Abscheidesammelbereich 28 weist ferner eine mit der Hauptförderleitung 12 verbundene Materialrückführöffnung 38 auf, über welche das rückgeführte Material wieder in die Hauptförderleitung 12 eingeleitet werden kann. Die Materialrückführöffnung 38 ist umlaufend ausgebildet. Ein Rückführbereich 40 der Hauptförderleitung 12 schließt direkt an die Materialrückführöffnung 38 des Abscheidesammelbereichs 28 an. Zwischen dem Rückführbereich 40 der Hauptförderleitung 12 und der Verteilkammer 14 ist ein aufrechter Leitungsabschnitt 42 der Hauptförderleitung 12 angeordnet. Der Abscheidesammelbereich 28 ist unterhalb des aufrechten Leitungsabschnitts 42 angeordnet. Der Abscheidesammelbereich 28 ist ein trichterförmiges Rückführbauteil integriert, welches auch einen Teilabschnitt der Hauptförderleitung 12 umfasst. Das Rückführbauteil umfasst eine Expansionsdüse 44 für die durch die Hauptförderleitung 12 strömende Luft-Material-Hauptströmung.

Zwischen den Abgängen 16a, 16f und dem Abscheidesammelbereich 28 befinden sich Strömungskreuzungsbereiche 26a, 26f, in welchen sich jeweils eine Rückführleitung 24a, 24f und eine Luftabführleitung 34a, 34f kreuzen. Die jeweiligen Rückführleitungen 24a, 24f führen von oben nach unten, nämlich jeweils von einem Abgang 16a-16f an der Verteilkammer 14 zu dem Abscheidesammelbereich 28. Die jeweiligen Luftabführleitungen 34a, 34f führen von unten nach oben, nämlich jeweils von dem Abscheidesammelbereich 28 zu der jeweiligen Ausbringleitung 20a, 20f. Dadurch, dass sich in dem Strömungskreuzungsbereich 26a, 26f eine Rückführleitung 24a, 24f und eine Luftabführleitung 34a, 34f kreuzen, kann die oberhalb des Strömungskreuzungsbereichs 26a, 26f radial innenliegende Luft-Material-Einzelströmung vor Erreichen des Abscheidesammelbereichs 28 unterhalb des Strömungskreuzungsbereichs 26a, 26f radial nach außen gebracht werden und die unterhalb des Strömungskreuzungsbereichs 26a, 26f radial innenliegende in dem Abscheidesammelbereich 28 abgeschiedene Luftströmung kann zum Einleiten in die Ausbringleitung 20a, 20f oberhalb des Strömungskreuzungsbereichs 26a, 26f radial nach außen gebracht werden. Somit kann auch das in dem Abscheidesammelbereich 28 einströmende Material nach der Luftabscheidung in die radial innenliegende Hauptförderleitung 12 eingeleitet werden.

Die Verteilvorrichtung 10 umfasst ferner eine nicht-dargestellte Steuerungseinrichtung zum Steuern der Schaltvorgänge der Umlenkelemente 22a, 22f, wobei die Steuerungseinrichtung beim Bestimmen von Schaltzeitpunkten für die Umlenkelemente 22a, 22f die Länge der jeweiligen Ausbringleitung 20a, 20f und die Förderdauer der jeweiligen Luft-Material-Einzelströmung durch die Ausbringleitung 20a-20f berücksichtigt.

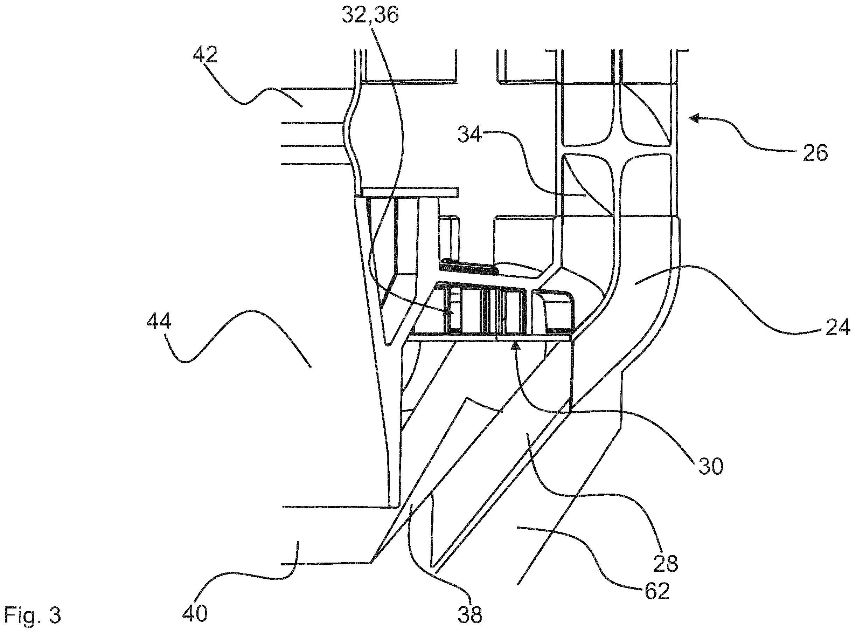

Die Fig. 3 zeigt Materialeinleitschutzelemente 36, welche zwischen dem Abscheidesammelbereich 28 und den Luftabführleitungen 34 einer Verteilvorrichtung 10 angeordnet sind. Die Materialeinleitschutzelemente 36 sind Stege, welche gemeinsam eine Labyrinthstruktur bilden. Die Labyrinthstruktur ist luftdurchlässig und verhindert das Einleiten von Material in die Luftabführöffnungen 34. Aus der über die Rückführleitung 24 in den Abscheidesammelbereich 28 einströmende Luft-Material-Einzelströmung wird über die Abscheidekante 30 Luft abgeschieden. Die abgeschiedene Luft wird über die Materialeinleitschutzelemente 36 und die Luftabführöffnung 32 aus dem Abscheidesammelbereich 28 ausgeleitet und in die Luftabführleitung 34 eingeleitet. Zwischen den Abgängen an der Verteilkammer 14 und dem Abscheidesammelbereich 28 befindet sich ein Strömungskreuzungsbereich 26, in welchem sich jeweils eine Rückführleitung 24 und eine Luftabführleitung 34 kreuzen. Die Rückführleitung 24 und die Luftabführleitung 34 sind in einem Strömungskreuzungsbereich 26 schraubenförmig über eine halbe Windung umeinander gewunden.

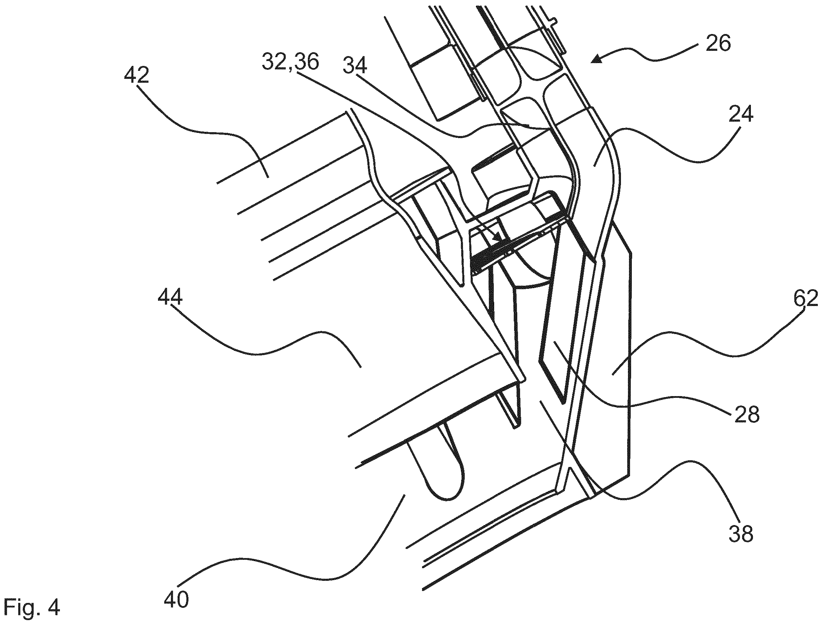

Bei der in der Fig. 4 dargestellten Verteilvorrichtung 10 ist das Materialeinleitschutzelement 36 als umlaufendes Blech mit einer Vielzahl von Luftabführöffnungen 32 ausgebildet. Das ringförmige Blech verhindert ein Einleiten des Materials, also des Saatguts, in die Luftabführöffnungen 34.

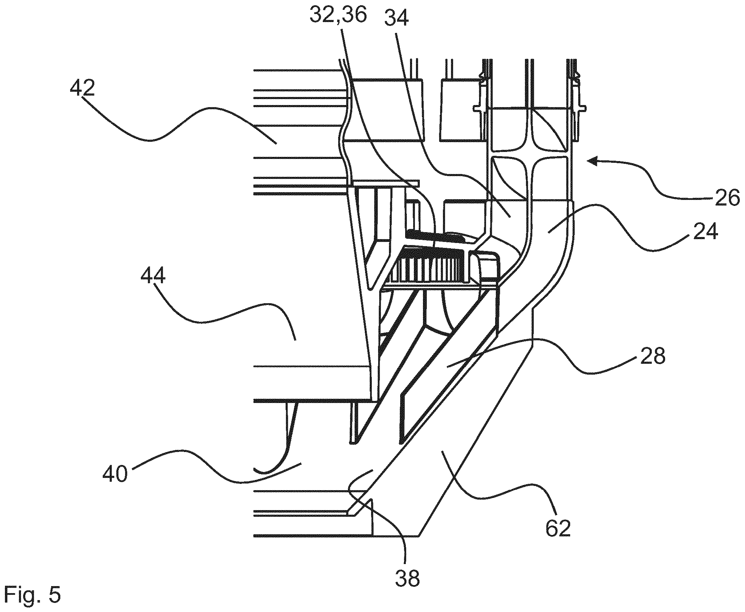

Die Fig. 5 zeigt ein Materialeinleitschutzelement 36, welches eine Gitterstruktur aufweist. Die Gitterstäbe sind auf einem umlaufenden Gitterring angeordnet und derart voneinander beabstandet, dass das körnige Material, also das Saatgut, die Gitterstäbe nicht passieren kann. Die Gitterstäbe reichen von der Abscheidekante 30 bis knapp unter die obere Wandung des Abscheidesammelbereiches 28, so dass sich eine zusammenhängende Luftabführöffnung 32 ergibt. Ein Einleiten von körnigem Material in die Luftabführleitungen 34 wird somit effektiv vermieden.

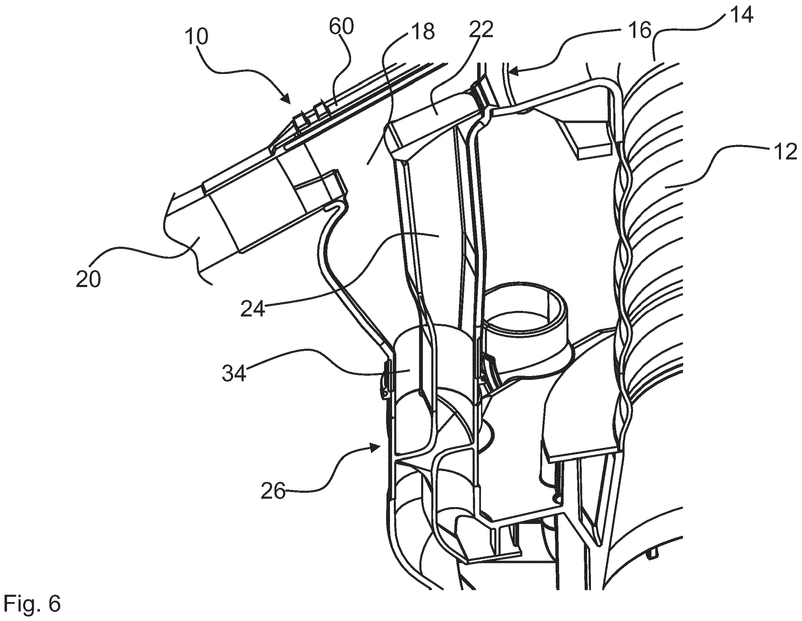

Die Fig. 6 zeigt eine Verteilvorrichtung 10, bei welcher sich an die Abgänge 16 der Verteilkammer 14 Umlenkeinheiten 60 anschließen. Die Umlenkeinheiten 60 sind jeweils mit einem schwenkbaren Umlenkelement 22 ausgestattet. Das Umlenkelement 22 kann zwischen einer Ausbringstellung und einer Rückführstellung verschwenkt werden. Bei dem in der Fig. 6 dargestellten Zustand befindet sich das Umlenkelement 22 in der Ausbringstellung. In der Ausbringstellung ist die Verbindung zwischen dem jeweiligen Abgang 16 und der Ausbringleitung 20 über den Ausbringdurchgang 18 freigegeben. Ferner ist die Verbindung zwischen dem Abgang 16 und dem Abscheidesammelbereich 28 über die Rückführleitung 24 gesperrt. Folglich wird die über den Abgang 16 aus der Verteilkammer 14 ausgeleitete Luft-Material-Einzelströmung ohne Rückführung direkt in die Ausbringleitung 20 eingeleitet und somit der mit der Ausbringleitung 20 verbundenen Ablageeinrichtung zugeführt.

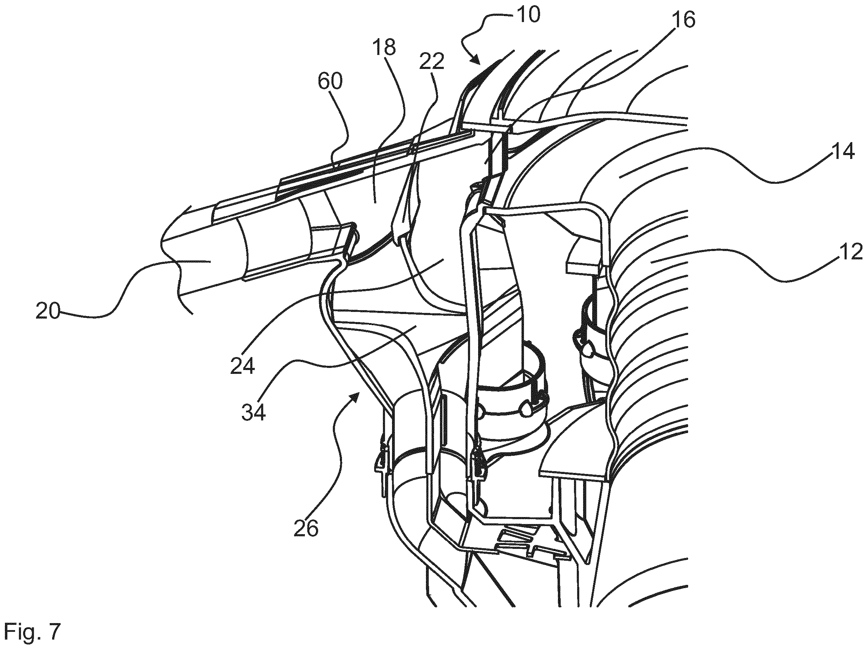

In der Fig. 7 ist eine Verteilvorrichtung 10 dargestellt, bei welcher sich das Umlenkelement 22 der Umlenkeinheit 60 in der Rückführstellung befindet. In der Rückführstellung ist die Verbindung zwischen dem jeweiligen Abgang 16 und der Ausbringleitung 20 über den Ausbringdurchgang 18 gesperrt. Ferner ist die Verbindung zwischen dem jeweiligen Abgang 16 und dem Abscheidesammelbereich über die Rückführleitung 24 freigegeben. Die über den Abgang 16 aus der Verteilkammer 14 ausgeleitete Luft-Material-Einzelströmung wird also in die Rückführleitung 24 geleitet und im Strömungskreuzungsbereich 26 radial nach außen geführt. Die im Abscheidesammelbereich 28 abgeschiedene Luft wird dann über die Luftabführleitung 34 in die Ausbringleitung 20 eingeleitet. Die abgeschiedene Luft wird im Strömungskreuzungsbereich 26 radial nach außen gebracht, sodass die Einleitung in die außenliegende Ausbringleitung 20 möglich ist.

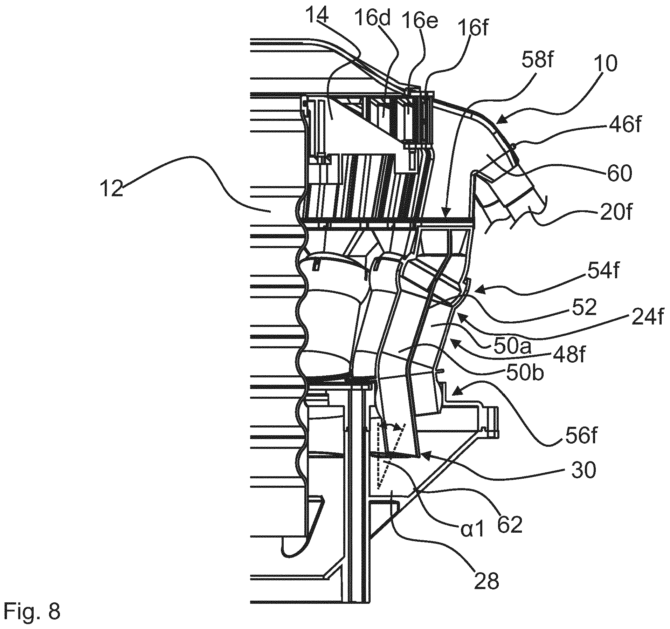

Die Fig. 8 zeigt eine Verteilvorrichtung 10, wobei die Verteilvorrichtung 10 eine Verteilkammer 14 mit 24 Abgängen 16d-16f aufweist. An die Abgänge 16d-16f schließen sich Umlenkeinheiten 60 an, in welchen jeweils ein bewegliches Umlenkelement 22 angeordnet ist. Die Stellung des Umlenkelements 22 kann auch mittels eines Hebels 46f von außen manuell eingestellt werden. Wenn sich die Umlenkelemente 22 in der Rückführstellung befinden, werden zwei Luft-Material-Einzelströmungen, welche die Verteilkammer 14 durch benachbarte Abgänge 16d-16f verlassen, in einen Bündelungsabschnitt 58f eingeleitet. In dem Bündelungsabschnitt 58f werden die zwei Luft-Material-Einzelströmungen vor dem Einleiten in ein gelenkig gelagertes Leitungsglied 48f der Rückführleitung 24f zusammengeführt. Innerhalb des gelenkig gelagerten Leitungsglieds 48f befinden sich zwei Leitungskanäle 50a, 50b, welche über eine Trennwand 52 voneinander getrennt sind. Der Leitungskanal 50b ist ein Rückführkanal, über welchen Material der zuvor zusammengeführten Luft-Material-Einzelströmungen zurück in die Hauptförderleitung 12 leitbar ist. Der Leitungskanal 50a ist ein Luftabführkanal, über welchen Luft, welche innerhalb des Abscheidesammelbereichs 28 aus den in den Abscheidesammelbereich 28 eingeleiteten Luft-Material-Strömungen abgeschieden wurde, in eine Ausbringleitung 20f einleitbar ist, wobei die Ausbringleitung 20f mit einer Ablageeinrichtung, beispielsweise einem Säschar, verbunden ist. Die Leitungskanäle 50a, 50b weisen unterschiedliche Längen auf, sodass die Trennwand 52 innerhalb des Rückführkörpers 62 eine Außenbewandung des Leitungsglieds 48f bildet. Die gelenkige Lagerung des Leitungsglieds 48f wird über Gelenk-Lagerungen 54f, 56f in den Endbereichen des Leitungsglieds 48f umgesetzt.

Aufgrund der 24 Abgänge 16d-16f der Verteilkammer 14 weisen die Gelenk-Lagerungen 54f, 56f einen spezifischen Abstand und Versatz zueinander auf. Diese Relativpositionierung der Gelenk-Lagerungen 54f führt zu einem spezifischen Anstellwinkel α1 des gelenkig gelagerten Leitungsglieds 48f.

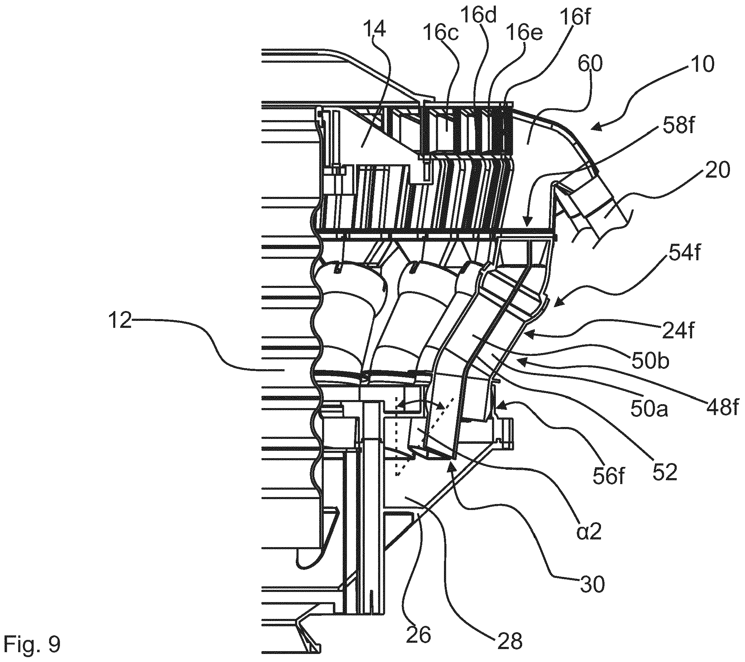

Die Verteilkammer 14 der in der Fig. 9 dargestellten Verteilvorrichtung 10 weist 32 Abgänge 16c-16f auf, sodass die oberen Gelenk-Lagerungen 54f aufgrund des erhöhten Platzbedarfs weiter außen liegen. Trotzdem kann ein Leitungsglied 48f in der Rückführleitung 24f genutzt werden, welches baugleich mit dem in der Fig. 8 dargestellten Leitungsglied 48f ist. Dies ist möglich, da das Leitungsglied 48f über die Gelenk-Lagerungen 54f, 56f gelenkig gelagert ist und somit ein abweichender Anstellwinkel α2 an dem Leitungsglied 48 eingestellt werden kann. Während der Montage der Verteilvorrichtung 10 wird an den gelenkig gelagerten Leitungsgliedern 48f über die als Kugelgelenk-Lagerungen ausgebildeten Gelenk-Lagerungen 54f, 56f ein geeigneter Anstellwinkel α1, α2 eingestellt. Modellübergreifend kommt somit zu einer erheblichen Reduzierung der Teilevielfalt. Außerdem können durch die gelenkige Lagerung der Leitungsglieder 54f trotz des Verzichts auf flexible Schläuche Montagetoleranzen ausgeglichen werden.

Die gelenkig gelagerten Leitungsglieder 48f sind starre Rohrleitungen, welche als Kunststoffteil, nämlich als Kunststoffspritzgussteil, ausgebildet sind. Die Leitungsglieder 48f sind also Kunststoffrohre bzw. Kunststoffrohrsegmente.

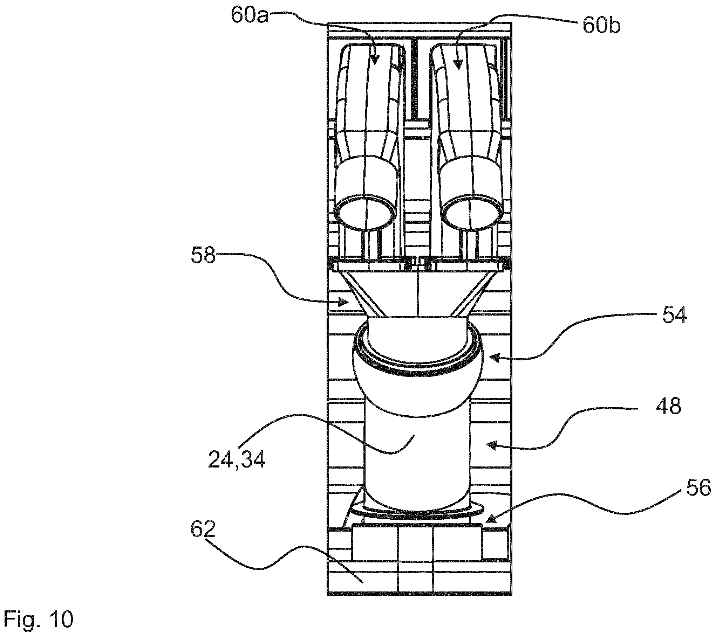

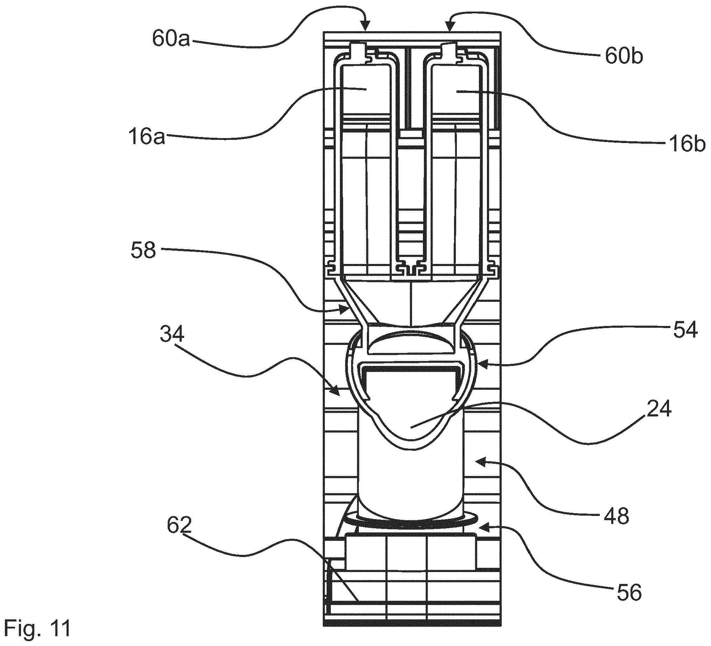

Wie in den Fig. 10 und 11 dargestellt, sind jeweils zwei Abgänge 16a, 16b einer Verteilkammer 14 über Umlenkeinheiten 60a, 60b mit einem Bündelungsabschnitt 58 verbunden. In dem Bündelungsabschnitt 58 werden die über die Abgänge 16a, 16b aus der Verteilkammer 14 ausgeleiteten Luft-Material-Einzelströmungen zu einer Sammelströmung zusammengeführt und über einen Leitungskanal 50b in dem Leitungsglied 48 in einen mit der Hauptförderleitung 12 verbundenen Rückführkörper 62 eingeleitet. Innerhalb des Rückführkörpers 62 wird Luft abgeschieden, welche dann über einen Leitungskanal 50a des Leitungsglieds 48 in Ausbringleitungen eingeleitet, welche mit Ablageeinrichtungen, wie etwa Säscharen, verbunden sind.

Das Leitungsglied 48 ist über die Gelenk-Lagerungen 54, 56 angelenkt, wobei nach Lösen einer der beiden Gelenk-Lagerungen eine Schwenkbewegung am Leitungsglied 48 ermöglicht wird.

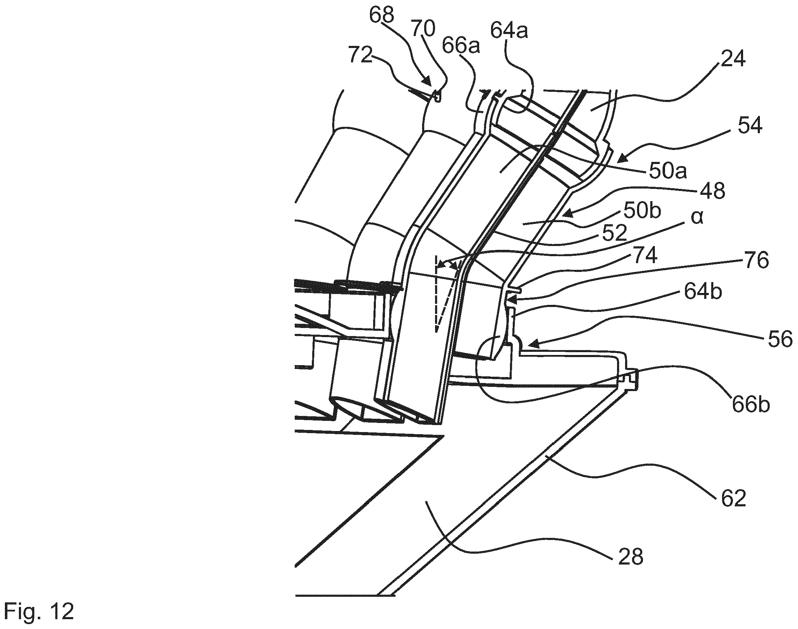

Die Fig. 12 zeigt, dass die Rückführleitung 24 eine erste Leitungsaufnahme 64a aufweist, wobei ein erster Gelenkabschnitt 66a des gelenkig gelagerten Leitungsglieds 48 an der ersten Leitungsaufnahme 64a angeordnet ist. Der erste Gelenkabschnitt 66a des gelenkig gelagerten Leitungsglieds 48 ist zerstörungsfrei lösbar mit der ersten Leitungsaufnahme 64a verbunden. Die erste Leitungsaufnahme 64a und der erste Gelenkabschnitt 66a des gelenkig gelagerten Leitungsglieds 48 bilden eine als Kugelgelenk-Lagerung ausgebildete Gelenk-Lagerung 54. Die erste Leitungsaufnahme 64a ist als Gelenkkopf ausgebildet, wobei der erste Gelenkabschnitt 66a als Gelenkpfanne ausgebildet ist. Die Gelenkpfanne bildet das Gegenstück zum Gelenkkopf und umschließt diesen abschnittsweise. Der Gelenkkopf wird so weit von der Gelenkpfanne umschlossen, dass nur rotatorische Bewegungen des gelenkig gelagerten Leitungsglieds 48 möglich sind, wenn das Leitungsglied 48 im unteren Teil nicht fixiert ist. Translatorische Bewegungen des gelenkig gelagerten Leitungsglieds 48 in Bezug auf die erste Leitungsaufnahme 64a werden von der Gelenk-Lagerung 54 verhindert.

Die Rückführleitung 24 weist ferner eine zweite Leitungsaufnahme 64b auf, wobei ein zweiter Gelenkabschnitt 66b des gelenkig gelagerten Leitungsglieds 48 an der zweiten Leitungsaufnahme 64b angeordnet ist. Der zweite Gelenkabschnitt 66b des gelenkig gelagerten Leitungsglieds 48 ist zerstörungsfrei lösbar mit der zweiten Leitungsaufnahme 64b verbunden. Die zweite Leitungsaufnahme 64b und der zweite Gelenkabschnitt 66b des gelenkig gelagerten Leitungsglieds 48 bilden eine als Kugelgelenk-Lagerung ausgebildete Gelenk-Lagerung 56. Der zweite Gelenkabschnitt 66b des Leitungsglieds 48 ist als Gelenkkopf ausgebildet. Der zweite Gelenkabschnitt 66b ist als zylindrische Gelenkkopfaufnahme ausgebildet. Dadurch, dass die zweite Leitungsaufnahme 54b nicht pfannenförmig ausgebildet ist, kann das Leitungsglied 48 translatorisch innerhalb der Gelenk-Lagerung 56 bewegt werden, sofern das Leitungsglied 48 im oberen Bereich nicht fixiert ist. Ferner weist das Leitungsglied 48 eine umlaufende Schulter 74 auf, welche als Schwenkanschlag dient. Die umlaufende Schulter 74 kommt in spezifischen Schwenkstellungen des Leitungsglieds 48 in Kontakt mit einem umlaufenden Kragen des Rückführkörpers 52, wobei der umlaufende Kragen die zweite Leitungsaufnahme 64b bildet. Zwischen der umlaufenden Schulter 74 und dem als Gelenkkopf ausgebildeten Gelenkabschnitt 66b ist ein zylindrischer Leitungsabschnitt 76 angeordnet, welcher trotz der Präsenz der umlaufenden Schulter 74 eine Linearbewegung des Leitungsglieds 48 zulässt.

Die durch die erste Leitungsaufnahme 64a und den ersten Gelenkabschnitt 66a des gelenkig gelagerten Leitungsglieds 48 gebildete Gelenk-Lagerung 54 ist mit einer Führungseinrichtung 68 ausgestattet. Die Führungseinrichtung 68 weist einen Führungsstift 70 auf, welcher in einem Führungsschlitz 72 geführt wird. Über die Führungseinrichtung 68 wird das gelenkig gelagerte Leitungsglied 48 bei einer Schwenkbewegung entlang eines vorgegebenen Bewegungspfads geführt. Ferner wird die Schwenkbewegung des gelenkig gelagerten Leitungsglieds 48 mittels der Führungseinrichtung 68 zumindest in einer Schwenkrichtung begrenzt.

Bei der in der Fig. 12 dargestellten Verteilvorrichtung 10 stellt sich aufgrund des Radialversatzes der Befestigungspunkte bzw. der Anlenkpunkte des Leitungsglieds 48 ein Anstellwinkel α ein. Dieser Anstellwinkel α kann während des Montagevorgangs der Verteilvorrichtung 10 eingestellt werden.

### Bezugszeichen

- 10: Verteilvorrichtung
- 12: Hauptförderleitung
- 14: Verteilkammer
- 16, 16a-16f: Abgänge
- 18, 18a, 18f: Ausbringdurchgänge
- 20, 20a, 20f: Ausbringleitungen
- 22, 22a, 22f: Umlenkelemente
- 24, 24a, 24f: Rückführleitungen
- 26, 26a, 26f: Strömungskreuzungsbereich
- 28: Abscheidesammelbereich
- 30: Abscheidekante
- 32: Luftabführöffnung
- 34, 34a, 34f: Luftabführleitungen
- 36: Materialeinleitschutzelemente
- 38: Materialrückführöffnung
- 40: Rückführbereich
- 42: Leitungsabschnitt
- 44: Expansionsdüse
- 46f: Hebel
- 48, 48f: Leitungsglied
- 50a, 50b: Leitungskanäle
- 52: Trennwand
- 54, 54f: Gelenk-Lagerung
- 56, 56f: Gelenk-Lagerung
- 58, 58f: Bündelungsabschnitt
- 60, 60a, 60b: Umlenkeinheiten
- 62: Rückführkörper
- 64a, 64b: Leitungsaufnahmen
- 66a, 66b: Gelenkabschnitte
- 68: Führungseinrichtung
- 70: Führungsstift
- 72: Führungsschlitz
- 74: Schulter
- 76: Leitungsabschnitt

- α, α1, α2: Anstellwinkel

## Patentansprüche

1. Verteilvorrichtung (10) für körniges Material, insbesondere Saatgut, für eine landwirtschaftliche Verteilmaschine, mit
- einer Verteilkammer (14), in welcher eine durch eine Hauptförderleitung (12) eingeleitete Luft-Material-Hauptströmung in mehrere durch Abgänge (16, 16a-16f) aus der Verteilkammer (14) herausleitbare Luft-Material-Einzelströmungen aufteilbar ist; und
- zumindest einer Rückführleitung (24, 24a, 24f), welche mit zumindest einem Abgang (16, 16a-16f) der Verteilkammer (14) verbunden ist und über welche Material von zumindest einer Luft-Material-Einzelströmung zurück in die Hauptförderleitung (12) leitbar ist;
**dadurch gekennzeichnet, dass** die Rückführleitung (24, 24a, 24f) ein an beiden Enden gelenkig gelagertes Leitungsglied (48, 48f) umfasst.

2. Verteilvorrichtung (10) nach Anspruch 1,
**dadurch gekennzeichnet, dass** das gelenkig gelagerte Leitungsglied (48, 48f) als starre Rohrleitung ausgebildet ist.

3. Verteilvorrichtung (10) nach Anspruch 1 oder 2,
**dadurch gekennzeichnet, dass** die Rückführleitung (24, 24a, 24f) eine erste Leitungsaufnahme (64a) aufweist, wobei ein erster Gelenkabschnitt (66a) des gelenkig gelagerten Leitungsglieds (48, 48f) an der ersten Leitungsaufnahme (64a) angeordnet ist.

4. Verteilvorrichtung (10) nach Anspruch 3,
**dadurch gekennzeichnet, dass** die erste Leitungsaufnahme (64a) und der erste Gelenkabschnitt (66a) des gelenkig gelagerten Leitungsglieds (48, 48f) eine Gelenk-Lagerung (54, 54f), insbesondere ein Kugelgelenk-Lagerung, bilden.

5. Verteilvorrichtung (10) nach einem der vorstehenden Ansprüche,
**dadurch gekennzeichnet, dass** die Rückführleitung (24, 24a, 24f) eine zweite Leitungsaufnahme (64b) aufweist, wobei ein zweiter Gelenkabschnitt (66b) des gelenkig gelagerten Leitungsglieds (48, 48f) an der zweiten Leitungsaufnahme (64b) angeordnet ist.

6. Verteilvorrichtung (10) nach Anspruch 5,
**dadurch gekennzeichnet, dass** die zweite Leitungsaufnahme (64b) und der zweite Gelenkabschnitt (66b) des gelenkig gelagerten Leitungsglieds (48, 48f) eine Gelenk-Lagerung (56, 56f), insbesondere ein Kugelgelenk-Lagerung, bilden.

7. Verteilvorrichtung (10) nach einem der Ansprüche 4 bis 6,
**dadurch gekennzeichnet, dass** die durch die erste Leitungsaufnahme (64a) und den ersten Gelenkabschnitt (66a) des gelenkig gelagerten Leitungsglieds (48, 48f) gebildete Gelenk-Lagerung (54, 54f) und/oder die durch die zweite Leitungsaufnahme (64b) und den zweiten Gelenkabschnitt (66b) des gelenkig gelagerten Leitungsglieds (48, 48f) gebildete Gelenk-Lagerung (56, 56f) mit einer Führungseinrichtung (68) ausgestattet ist, welche dazu eingerichtet ist, das gelenkig gelagerte Leitungsglied (48, 48f) bei einer Schwenkbewegung entlang eines vorgegebenen Bewegungspfads zu führen und/oder die Schwenkbewegung des gelenkig gelagerten Leitungsglied (48, 48f) zu begrenzen.

8. Verteilvorrichtung (10) nach einem der Ansprüche 5 bis 7,
**gekennzeichnet durch** einen Rückführkörper (62), welcher mehrere Rückführleitungen (24, 24a, 24f) mit der Hauptförderleitung (12) verbindet, wobei an dem Rückführkörper (62) mehrere zweite Leitungsaufnahmen (64b) für mehrere gelenkig gelagerte Leitungsglieder (48, 48f) ausgebildet sind.

9. Verteilvorrichtung (10) nach einem der vorstehenden Ansprüche,
**dadurch gekennzeichnet, dass** innerhalb des gelenkig gelagerten Leitungsglieds (48, 48f) zwei voneinander getrennte Leitungskanäle (50a, 50b) verlaufen.

10. Verteilvorrichtung (10) nach einem der vorstehenden Ansprüche,
**dadurch gekennzeichnet, dass** die Rückführleitung (24, 24a, 24f) mit zumindest zwei Abgängen (16, 16a-16f) der Verteilkammer (14) verbunden ist und einen Bündelungsabschnitt (58, 58f) aufweist, welcher dazu eingerichtet ist, zumindest zwei Luft-Material-Einzelströmungen vor dem Einleiten in das gelenkig gelagerte Leitungsglied (48, 48f) zusammenzuführen.

11. Verteilvorrichtung (10) nach einem der vorstehenden Ansprüche,
**gekennzeichnet durch** einen Abscheidesammelbereich (28), in welchen mehrere Rückführleitungen (24, 24a, 24f) münden und in welchem Luft aus mehreren in den Abscheidesammelbereich (28) eingeleiteten Luft-Material-Strömungen zur Einleitung in mehrere jeweils mit einer Ausbringleitung (20, 20a, 20f) verbundene Luftabführleitungen (34, 34a, 34f) der Verteilvorrichtung (10) abscheidbar ist.

12. Verteilvorrichtung (10) nach Anspruch 11,
**dadurch gekennzeichnet, dass** der Abscheidesammelbereich (28) teilweise oder vollständig umlaufend ausgebildet ist,
wobei der Abscheidesammelbereich (28) vorzugsweise eine, insbesondere nur eine, mit mehreren oder sämtlichen Luftabführleitungen (34, 34a, 34f) verbundene Luftabführöffnung (32) aufweist.

13. Landwirtschaftliche Verteilmaschine zum Ausbringen von körnigem Material, mit
- einer Verteilvorrichtung (10) nach einem der vorstehenden Ansprüche; und
- mehreren Ablageeinrichtungen zum Ablegen des körnigen Materials auf eine landwirtschaftliche Nutzfläche, wobei die Ablageeinrichtungen jeweils über eine Ausbringleitung (20, 20a, 20f) mit einem Abgang an der Verteilkammer (14) verbunden sind.

14. Montageverfahren für eine Verteilvorrichtung (10) für körniges Material, insbesondere für eine Verteilvorrichtung (10) nach einem der Ansprüche 1 bis 12, mit den Schritten:
- Bereitstellen einer Baugruppe der Verteilvorrichtung (10), wobei die Baugruppe eine Verteilkammer (14) umfasst und wobei in der Verteilkammer (14) eine durch eine Hauptförderleitung (12) eingeleitete Luft-Material-Hauptströmung in mehrere durch Abgänge (16, 16a-16f) aus der Verteilkammer (14) herausleitbare Luft-Material-Einzelströmungen aufteilbar ist; und
- Verbinden zumindest eines Abgangs der Verteilkammer (14) mit einer Rückführleitung (24, 24a, 24f), über welche Material von zumindest einer Luft-Material-Einzelströmung zurück in die Hauptförderleitung (12) leitbar ist;
**gekennzeichnet durch** den Schritt:
- Ausrichten eines an beiden Enden gelenkig gelagerten Leitungsglieds (48, 48f) der Rückführleitung (24, 24a, 24f).

15. Montageverfahren nach Anspruch 14,
**dadurch gekennzeichnet, dass** das gelenkig gelagerte Leitungsglied (48, 48f) über eine Gelenk-Lagerung (54, 54f, 56, 56f), insbesondere ein Kugelgelenk-Lagerung, ausgerichtet wird.

## Claims

1. Distribution device (10) for granular material, in particular seed, for an agricultural distribution machine, having
- a distribution chamber (14) in which a main air-material flow introduced through a main conveyor line (12) can be divided into a plurality of individual air-material flows which can be guided out of the distribution chamber (14) through outlets (16, 16a-16f); and
- at least one return line (24, 24a, 24f) which is connected to at least one outlet (16, 16a-16f) of the distribution chamber (14) and via which material from at least one individual air-material flow can be guided back into the main conveying line (12);
**characterized in that** the return line (24, 24a, 24f) comprises a line member (48, 48f) which is articulated at both ends.

2. Distribution device (10) according to claim 1,
**characterized in that** the articulated line member (48, 48f) is formed as a rigid pipe.

3. Distribution device (10) according to claim 1 or 2,
**characterized in that** the return line (24, 24a, 24f) has a first line receptacle (64a), a first joint portion (66a) of the articulated line member (48, 48f) being arranged on the first line receptacle (64a).

4. Distribution device (10) according to claim 3,
**characterized in that** the first line receptacle (64a) and the first joint portion (66a) of the articulated line member (48, 48f) form a joint bearing (54, 54f), in particular a ball joint bearing.

5. Distribution device (10) according to any of the preceding claims,
**characterized in that** the return line (24, 24a, 24f) has a second line receptacle (64b), a second joint portion (66b) of the articulated line member (48, 48f) being arranged on the second line receptacle (64b).

6. Distribution device (10) according to claim 5,
**characterized in that** the second line receptacle (64b) and the second joint portion (66b) of the articulated line member (48, 48f) form a joint bearing (56, 56f), in particular a ball joint bearing.

7. Distribution device (10) according to any of claims 4 to 6,
**characterized in that** the articulated bearing (54, 54f) formed by the first line receptacle (64a) and the first joint portion (66a) of the articulated line member (48, 48f) and/or the articulated bearing (56, 56f) formed by the second line receptacle (64b) and the second joint portion (66b) of the articulated line member (48, 48f) is equipped with a guide means (68) which is designed to guide the articulated line member (48, 48f) during a pivoting movement along a predetermined movement path and/or to limit the pivoting movement of the articulated line member (48, 48f).

8. Distribution device (10) according to any of claims 5 to 7,
**characterized by** a return body (62) which connects a plurality of return lines (24, 24a, 24f) to the main conveyor line (12), a plurality of second line receptacles (64b) for a plurality of articulated line members (48, 48f) being formed on the return body (62).

9. Distribution device (10) according to any of the preceding claims,
**characterized in that** two separate line channels (50a, 50b) run within the articulated line member (48, 48f).

10. Distribution device (10) according to any of the preceding claims,
**characterized in that** the return line (24, 24a, 24f) is connected to at least two outlets (16, 16a-16f) of the distribution chamber (14) and has a bundling portion (58, 58f) which is designed to combine at least two individual air-material flows before introduction into the articulated line member (48, 48f).

11. Distribution device (10) according to any of the preceding claims,
**characterized by** a separation collection region (28) into which a plurality of return lines (24, 24a, 24f) open and in which air from a plurality of air-material flows introduced into the separation collection region (28) can be separated for introduction into a plurality of air discharge lines (34, 34a, 34f) of the distribution device (10), each connected to a discharge line (20, 20a, 20f).

12. Distribution device (10) according to claim 11,
**characterized in that** the separation collection region (28) is formed partially or completely around the periphery, the separation collection region (28) preferably having one, in particular only one, air discharge opening (32) connected to a plurality of or all of the air discharge lines (34, 34a, 34f).

13. Agricultural distribution machine for spreading granular material, having
- a distribution device (10) according to any of the preceding claims; and
- a plurality of depositing means for depositing the granular material on an agricultural area, wherein the depositing means are each connected to an outlet on the distribution chamber (14) via a discharge line (20, 20a, 20f).

14. Assembly method for a distribution device (10) for granular material, in particular for a distribution device (10) according to any of claims 1 to 12, comprising the steps of:
- providing an assembly of the distribution device (10), the assembly comprising a distribution chamber (14) and in the distribution chamber (14) a main air-material flow introduced through a main conveyor line (12) being able to be divided into a plurality of individual air-material flows that can be guided out of the distribution chamber (14) through outlets (16, 16a-16f); and
- connecting at least one outlet of the distribution chamber (14) to a return line (24, 24a, 24f), via which material from at least one individual air-material flow can be guided back into the main conveying line (12);
**characterized by** the step of:
- aligning a line member (48, 48f) of the return line (24, 24a, 24f), which line member is articulated at both ends.

15. Assembly method according to claim 14,
**characterized in that** the articulated line member (48, 48f) is aligned via an articulated bearing (54, 54f, 56, 56f), in particular a ball joint bearing.

## Revendications

1. Dispositif de distribution (10) pour du matériau granulaire, en particulier des semences, pour une machine de distribution agricole, comportant
- une chambre de distribution (14) dans laquelle un écoulement principal air-matière introduit par une conduite de transport principale (12) peut être divisé en plusieurs écoulements individuels air-matière pouvant être évacués de la chambre de distribution (14) par des sorties (16, 16a-16f) ; et
- au moins une conduite de retour (24, 24a, 24f) qui est reliée à au moins une sortie (16, 16a-16f) de la chambre de distribution (14) et par l'intermédiaire de laquelle du matériau provenant d'au moins un écoulement individuel air-matériau peut être renvoyé dans la conduite de transport principale (12) ;
**caractérisé en ce que** la conduite de retour (24, 24a, 24f) comprend un élément de conduite (48, 48f) monté de manière à être articulé aux deux extrémités.

2. Dispositif de distribution (10) selon la revendication 1,
**caractérisé en ce que** l'élément de conduite (48, 48f) monté de manière à être articulé est conçu comme une conduite tubulaire rigide.

3. Dispositif de distribution (10) selon la revendication 1 ou 2,
**caractérisé en ce que** la conduite de retour (24, 24a, 24f) présente un premier logement de conduite (64a), dans lequel une première section d'articulation (66a) de l'élément de conduite (48, 48f) monté de manière à être articulé est disposée au niveau du premier logement de conduite (64a).

4. Dispositif de distribution (10) selon la revendication 3,
**caractérisé en ce que** le premier logement de conduite (64a) et la première section d'articulation (66a) de l'élément de conduite (48, 48f) monté de manière à être articulé forment un palier d'articulation (54, 54f), en particulier un palier d'articulation à bille.

5. Dispositif de distribution (10) selon l'une des revendications précédentes,
**caractérisé en ce que** la conduite de retour (24, 24a, 24f) présente un second logement de conduite (64b), dans lequel une seconde section d'articulation (66b) de l'élément de conduite (48, 48f) monté de manière à être articulé est disposée au niveau du second logement de conduite (64b).

6. Dispositif de distribution (10) selon la revendication 5,
**caractérisé en ce que** le second logement de conduite (64b) et la seconde section d'articulation (66b) de l'élément de conduite (48, 48f) monté de manière à être articulé forment un palier d'articulation (56, 56f), en particulier un palier d'articulation à bille.

7. Dispositif de distribution (10) selon l'une des revendications 4 à 6,
**caractérisé en ce que** le palier d'articulation (54, 54f) formé par le premier logement de conduite (64a) et la première section d'articulation (66a) de l'élément de conduite (48, 48f) monté de manière à être articulé et/ou le palier d'articulation (56, 56f) formé par le second logement de conduite (64b) et la seconde section d'articulation (66b) de l'élément de conduite (48, 48f) monté de manière à être articulé sont équipés d'un appareil de guidage (68) qui est conçu pour guider l'élément de conduite (48, 48f) monté de manière à être articulé lors d'un mouvement de pivotement le long d'un chemin de déplacement prédéfini et/ou pour limiter le mouvement de pivotement de l'élément de conduite (48, 48f) monté de manière à être articulé.

8. Dispositif de distribution (10) selon l'une des revendications 5 à 7,
**caractérisé par** un corps de retour (62) qui relie plusieurs conduites de retour (24, 24a, 24f) à la conduite de transport principale (12), dans lequel plusieurs seconds logements de conduite (64b) pour plusieurs éléments de conduite (48, 48f) montés de manière à être articulés sont réalisés sur le corps de retour (62).

9. Dispositif de distribution (10) selon l'une des revendications précédentes,
**caractérisé en ce que** deux canaux de conduite (50a, 50b) séparés l'un de l'autre s'étendent à l'intérieur de l'élément de conduite (48, 48f) monté de manière à être articulé.

10. Dispositif de distribution (10) selon l'une des revendications précédentes,
**caractérisé en ce que** la conduite de retour (24, 24a, 24f) est reliée à au moins deux sorties (16, 16a-16f) de la chambre de distribution (14) et présente une section de regroupement (58, 58f) qui est conçue pour réunir au moins deux écoulements individuels air-matière avant leur introduction dans l'élément de conduite (48, 48f) monté de manière à être articulé.

11. Dispositif de distribution (10) selon l'une des revendications précédentes,
**caractérisé par** une zone de collecte de séparation (28) dans laquelle débouchent plusieurs conduites de retour (24, 24a, 24f) et dans laquelle de l'air provenant de plusieurs écoulements air-matière introduits dans la zone de collecte de séparation (28) peut être séparé pour être introduit dans plusieurs conduites d'évacuation d'air (34, 34a, 34f) du dispositif de distribution (10) respectivement reliées à une conduite d'épandage (20, 20a, 20f).

12. Dispositif de distribution (10) selon la revendication 11,
**caractérisé en ce que** la zone de collecte de séparation (28) est réalisée de manière à être partiellement ou entièrement périphérique, dans lequel la zone de collecte de séparation (28) présente de préférence une ouverture d'évacuation d'air (32), en particulier une seule ouverture d'évacuation d'air, reliée à plusieurs ou à toutes les conduites d'évacuation d'air (34, 34a, 34f).

13. Machine de distribution agricole permettant d'épandre du matériau granuleux, comportant
- un dispositif de distribution (10) selon l'une des revendications précédentes,
- plusieurs appareils de dépôt permettant de déposer le matériau granulaire sur une surface agricole utile, dans lequel les appareils de dépôt sont reliés respectivement par l'intermédiaire d'une conduite d'épandage (20, 20a, 20f) à une sortie au niveau de la chambre de distribution (14).

14. Procédé de montage pour un dispositif de distribution (10) pour du matériau granulaire, en particulier pour un dispositif de distribution (10) selon l'une des revendications 1 à 12, comportant les étapes consistant à :
- fournir un ensemble du dispositif de distribution (10), dans lequel l'ensemble comprend une chambre de distribution (14) et dans lequel un écoulement principal air-matière introduit par une conduite de transport principale (12) peut être divisé dans la chambre de distribution (14) en plusieurs écoulements individuels air-matière pouvant être évacués de la chambre de distribution (14) par des sorties (16, 16a-16f) ; et
- relier au moins une sortie de la chambre de distribution (14) à une conduite de retour (24, 24a, 24f) par l'intermédiaire de laquelle du matériau provenant d'au moins un écoulement individuel air-matière peut être renvoyé dans la conduite de transport principale (12) ;
**caractérisé par** l'étape consistant à :
- aligner un élément de conduite (48, 48f), monté de manière à être articulé aux deux extrémités, de la conduite de retour (24, 24a, 24f).

15. Procédé de montage selon la revendication 14,
**caractérisé en ce que** l'élément de conduite (48, 48f) monté de manière à être articulé est orienté par l'intermédiaire d'un palier d'articulation (54, 54f, 56, 56f), en particulier un palier d'articulation à bille.
